**Europäisches Patentamt**

**European Patent Office**

**Office européen des brevets**

(19)

(11) Veröffentlichungsnummer : **0 018 963**
**B1**

(12) **EUROPÄISCHE PATENTSCHRIFT**

(45) Veröffentlichungstag der Patentschrift :
**11.04.84**

(21) Anmeldenummer : **80890043.5**

(22) Anmeldetag : **11.04.80**

(51) Int. Cl.³ : **G 01 F   1/00**

(54) **Vorrichtung für die Positionierung einer Messonde und Schaltungsanordnung zur Steuerung derselben sowie zur Anzeige der Messondenposition und des Messwertes.**

(30) Priorität : **13.04.79 AT 2791/79**

(43) Veröffentlichungstag der Anmeldung :
**12.11.80 Patentblatt 80/23**

(45) Bekanntmachung des Hinweises auf die Patenterteilung : **11.04.84 Patentblatt 84/15**

(84) Benannte Vertragsstaaten :
**FR IT**

(56) Entgegenhaltungen :
**MESURES & CONTROL INDUSTRIEL, Band 18,
Februar 1953, Nr. 189, Seiten 71-77, Paris, FR., "Les
Appareils de Mesure en Hydraulique"
MEASUREMENT AND CONTROL, Band 4, Nr. 3, März
1971, Seiten T41-T44, London, G.B., T.H.Y. TEBBUTT
et al.: "Flow Measurement"**

(73) Patentinhaber : **Schandl, Hellmut
Bahnhofstrasse 1
A-9013 Klagenfurt Kärnten (AT)**

(72) Erfinder : **Schandl, Hellmut
Bahnhofstrasse 1
A-9013 Klagenfurt Kärnten (AT)**

(74) Vertreter : **Beer, Otto, Dipl.-Ing. et al
Lindengasse 8
A-1071 Wien (AT)**

## Vorrichtung für die Positionierung einer Meßsonde und Schaltungsanordnung zur Steuerung derselben sowie zur Anzeige der Meßsondenposition und des Meßwertes

Die Erfindung betrifft eine Vorrichtung für die Positionierung einer Meßsonde zur Messung des Wassergeschwindigkeit bzw. Durchflußmenge, insbesondere von Flüssen, mit einer etwa horizontal und quer zur Fließrichtung über ein an Seilstützen abgestütztes Seil verstellbaren Haltekonstruktion, welche die in vertikaler Richtung gleichfalls über ein an den Seilstützen abgestütztes Seil verstellbare Meßsonde trägt, wobei für die Verstellung jedes Seils ein von den Seilstützen getragener Seilantrieb vorgesehen ist. Ferner betrifft die Erfindung eine Schaltungsanordnung zur Steuerung bzw. Erfassung der horizontalen und vertikalen Lage der Meßsonde sowie des von der Meßsonde ermittelten Meßwertes.

In der Hydrographie ist außer der Kenntnis von Wasserstandshöhen die zugehörige Durchflußmenge von besonderer Bedeutung. Dazu ist es notwendig, neben dem Durchflußquerschnitt die Wassergeschwindigkeit zu messen, wozu es bekannt ist, kalibrierte Meßflügel zu verwenden, deren Umdrehungsgeschwindigkeit der Fließgeschwindigkeit proportional ist. Mit einem solchen Meßflügel werden in Abständen über das ganze Flußprofil verteilt, in Meßlotrechten an mehreren Punkten, die Einzelgeschwindigkeiten ermittelt.

Während früher hauptsächlich mit Stangenflügeln von Brücken oder Booten gemessen wurde, hat sich in den letzten zwei bis drei Jahrzehnten die sogenannte Seilkrananlage bei mittleren Flüssen als Meßvorrichtung durchgesetzt und stellt die verläßlichste Einrichtung für Abflußmessungen in dieser Größenordnung dar. Sie besteht aus einem Tragseil, welches auf zwei Stützen an den beiden Ufern gelagert und meist in separaten Betonblöcken verankert ist. Eine auf dem Tragseil geführte und durch ein Umlaufseil gezogene Laufkatze trägt den Schwimmflügel. Dieses Umlaufseil dient zum Horizontaltransport des Schwimmflügels quer zur Strömungsrichtung. Der Schwimmflügel wird mit einem eigenen Hubseil über eine Rolle der Laufkatze vertikal bewegt und in die gewünschte Stellung gebracht. Für die horizontale und vertikale Verstellung des Schwimmflügels dient meist eine von Hand aus zu betätigende stationäre Windenkonstruktion, die aufgrund der geforderten Genauigkeit für die Lageeinstellung aufwendig konzipiert sein muß und kompliziert zu bedienen ist.

Die Erfindung hat es sich daher zur Aufgabe gestellt, eine Windenkonstruktion zu schaffen, die einfach in der Konstruktion sowie bequem und genau zu bedienen sein soll. Sie soll, als mobiler Bestandteil einer Seilkrananlage konzipiert rasch betriebsbereit, elektrisch angetrieben und zumindest in ihren Einzelelementen von geringem Gewicht sein.

Erfindungsgemäß wird diese Aufgabe bei einer Vorrichtung der eingangs genannten Art dadurch gelöst, daß der Seilantrieb der Vertikalverstellung über ein Gehäuse an den Seilstützen lösbar angebaut ist, und daß für die Horizontalverstellung der Haltekonstruktion und die Vertikalverstellung der Meßsonde gesonderte Getriebe vorgesehen sind, die auf den Wellen der Seilantriebe für die Vertikal- bzw. Horizontalverstellung jeweils so angeordnet sind, daß sie nach Lösen einer Arretierung von diesen Wellen abnehmbar sind, und daß an eines dieser Getriebe ein das Maß der Positionierung bestimmendes Antriebsaggregat angekuppelt ist und daß die Getriebe antriebsmäßig miteinander kuppelbar sind. Dadurch, daß die Getriebe und die Seiltrommel samt Trommelgehäuse als gesonderte, demontierbare Baugruppe konzipiert sind, ist es möglich, diese bei allen Seilkrananlagen zur Anwendung zu bringen, vielmehr können diese Baugruppen von Meßort zu Meßort transportiert und an der Seilkrananlage, an der gemessen werden soll, zum Einsatz gebracht werden. Hiedurch ist aber auch gewährleistet, daß das Antriebssystem sofort betriebsbereit ist, und somit keine Wartungs- und Justierarbeiten notwendig sind, wie dies bei den stationären Systemen bislang der Fall war.

Aufgrund der erfindungsgemäß erzielten Zuverlässigkeit des Antriebssystemes ist dieses ohne weiteres einer elektronischen Steuerung zugänglich und es ist eine weitere Aufgabe vorliegender Erfindung, eine solche Steuerschaltung anzugeben, die aber so konzipiert ist, daß sie neben einer elektronischen Anzeige der Lage der Meßsonde sowie des Meßwertes sowohl eine automatische Steuerung der Verstellbewegung als auch eine solche von Hand aus erlaubt.

Bei einer Schaltungsanordnung der eingangs genannten Art wird dies erfindungsgemäß dadurch erreicht, daß der Haltekonstruktion und der Meßsonde Lagesensoren, insbesondere Rotationsimpulsgeber, zugeordnet sind, die Meßsonde als Zwillingssonde in Form eines Meßflügelgebers, welcher ein der Umdrehungsgeschwindigkeit des Meßflügels proportionales digitales Signal abgibt, und in Form eines Endschalters ausgebildet ist, die Geber jeweils mit dem Eingang einer Zählschaltung verbunden sind, welche Anzeige- und Steuerausgänge aufweist und diese Steueraugsgänge unter Zwischenschaltung einer Verriegelungs- und Verstärkerschaltung an eine Steuerschaltung für einen insbesonders stufenlos regelbaren Antriebsmotor, Bremse und/oder Kupplung geführt sind.

Die angestrebte Umschaltmöglichkeit von Automatik auf Handbetrieb wird erfindungsgemäß am zweckmäßigsten dadurch erreicht, daß die Verriegelungsschaltung als Trennschaltung ausgebildet ist, welche die Steuerausgänge der Zählschaltungen bzw. Auswerteschaltung von der Steuerschaltung für Antriebsmotor, Bremse und/oder Kupplung trennt.

Nachstehend ist die Erfindung unter Bezugnahme auf die Zeichnungen beispielsweise beschrieben. Es zeigt

Figur 1 den Prinzipaufbau einer Seilkrananlage für die Meßsondenverstellung,

Figur 2 die Vorderansicht einer erfindungsgemäßen Vorrichtung,

Figur 3 das Getriebe für die Vertikalverstellung der Vorrichtung gemäß Fig. 2, gleichfalls in Vorderansicht,

Figur 4 das Getriebe der Fig. 3 in Seitenansicht und

Figur 5 das Blockschaltbild einer erfindungsgemäßen Steuer- und Anzeigeschaltung.

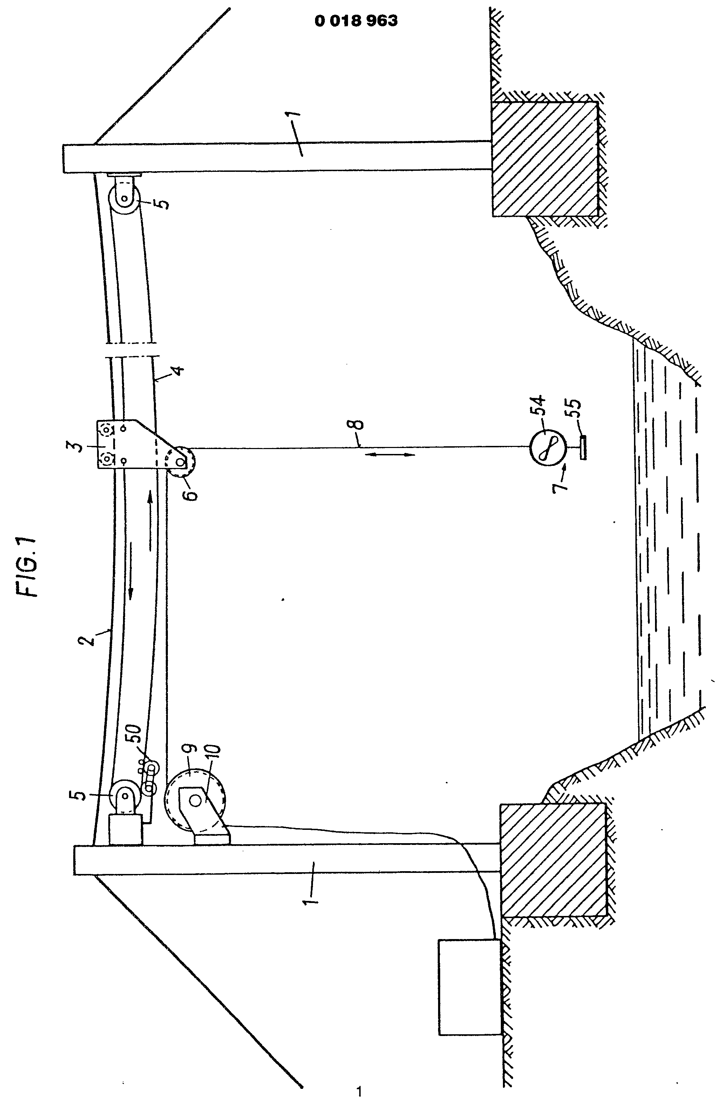

Die Seilkrananlage gemäß Fig. 1 besteht aus zwei am Ufer eines Flusses verankerten Seilstützen 1, zwischen welchen ein Tragseil 2 für eine Laufkatze 3 abgespannt ist. Die Horizontalverstellung der Laufkatze 3 erfolgt über ein Transportseil 4, das über Seilrollen 5 läuft, die von den Seilstützen 1 getragen sind. Das flußseitige Ende der Laufkatze trägt eine Seilrolle 6, über welche das die Meßsonde 7 tragende Meßseil 8 geführt ist. Mit 9 ist die Seiltrommel für das Meßseil bezeichnet, die in einem an der Seilstütze 1 angeordneten Gehäuse 10 gelagert ist.

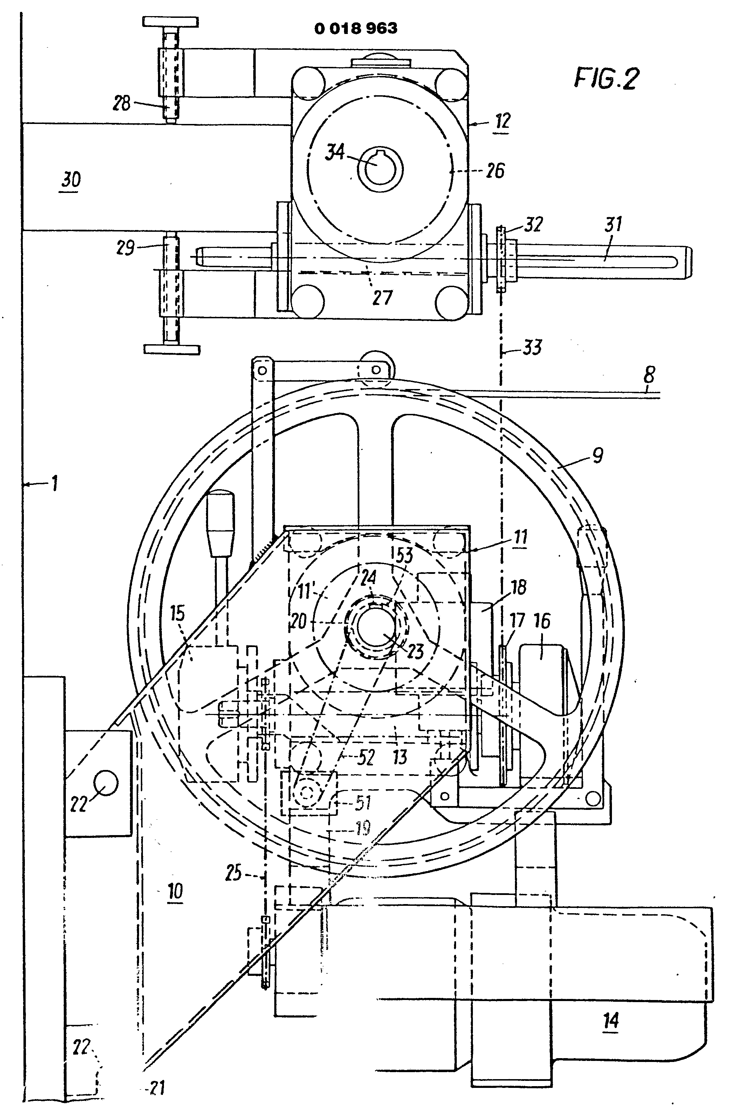

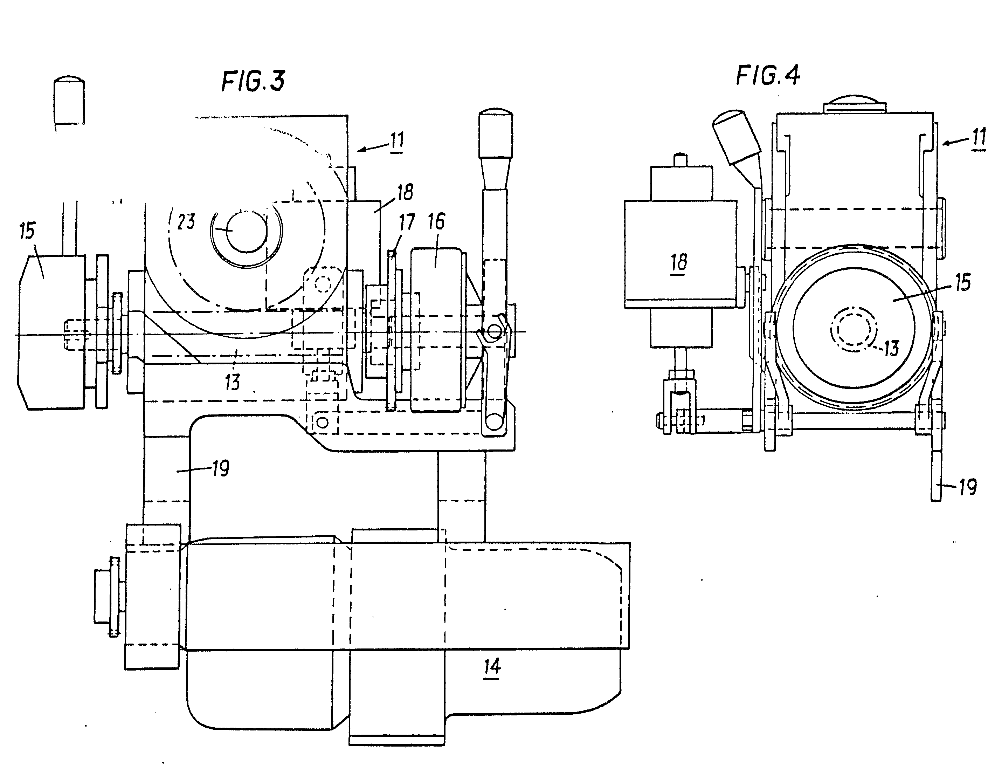

Eine erfindungsgemäße Antriebsvorrichtung zur Verstellung der Seile 4 und 8 zeigen die Fig. 2 bis 4. Diese Antriebsvorrichtung besteht aus einem Getriebe 11 für die Vertikalstellung und einem Getriebe 12 für die Horizontalverstellung.

Das Getriebe 11 für die Vertikalverstellung vesteht aus einem Schneckengetriebe mit dem Schneckenrad 11' und der Schneckenspindel 13, dem Antriebsmotor 14, eihner elektrisch oder händisch betätigbaren Bremse 15 und einer Scheibenkupplung 16. Die Scheibenkupplung dient dem Ankuppeln eines Kettenrades 17 an die Schneckenspindel 13, die Bremse 15 ist gleichfalls der Schneckenspindel zugeordnet und dient dem Abbremsen der Spindelrotation nach Abschalten des Motors. Die Kraftübertragung vom Motor 14 auf die Schneckenspindel 13 erfolgt mittels einer Rollenkette 25. Bei dem Antriebsmotor handelt es sich um einen in vier Gängen stufenlos regelbaren Elektromotor, z. B. einem Einphasenmotor. Ferner ist am Getriebe noch ein Elektromagnet 18 für die elektrische Betätigung der Kupplung vorgesehen, so daß diese automatisch betätigbar ist, was nachstehend noch im einzelnen erläutert werden wird. Die Kupplung ist aber auch von Hand aus betätigbar. Alle vorstehend aufgeführten Teile sind an einem Rahmen 19 angeordnet. Für die Verstellung der Meßsonde von Hand aus kann z. B. direkt an dem einen Kettenrad der Rollenkette 25, nach Abkupplung des Motors, eine Handkurbel aufsetzbar sein.

Die Seiltrommel 9 für das Meßseil 8 ist mit ihrer Welle in dauergeschmierten, doppelseitig abgedeckten Rillenkugellagern 20 gelagert, welche im Gehäuse 10 angeordnet sind ; das Gehäuse 10 ist als verwindungssteife Schweißkonstruktion ausgebildet.

Das Gehäuse ist ein gesonderter Bauteil und als solcher zur Gänze von der Seilstütze 1 demontierbar. Zu diesem Zweck weist das Gehäuse an seinem seilstützenseitigen Ende eine schlitzförmige Ausnehmung 21 aus, mit welcher es auf Bolzen 22 der Seilstütze 1 aufsetzbar ist. Das Gehäuse kann dann gegen die Seilstütze 1 soweit hochgehoben werden, bis es gegen die Seilstütze zu liegen kommt. Durch eine Bohrung des Gehäuses und Gegenbohrungen in einem Flansch der Seilstütze kann dann ein Bolzen 22 durchgeschoben und das Gehäuse in seiner Lage fixiert werden. Die Ausbildung und gegenseitige Lage vom Seilstützenflansch und Gehäuse ist so, daß ein seitliches Verschieben des Gehäuses verhindert ist.

Die Welle 23 der Seiltrommel 9 ist wenigstens an einem Ende über das Lager 20 hinaus verlängert und mit einer Paßfeder 24 ausgebildet. Das Schneckenrad 11' wieder hat eine Hohlwelle mit entsprechend eingearbeiteter Paßfedernut. Das gesamte Getriebe 11 kann somit auf diesen Wellenstummel kraftschlüssig aufgeschoben werden. Die Verbindung des Getriebes 11 mit dem Seiltrommelgehäuse erfolgt durch Paßbolzen, die Sicherung gegen achsiales Verschieben erfolgt durch eine stirnseitig in den Wellenstummel 23 eingeschraubte Flügelmutter samt Beilagscheibe, was im einzelnen nicht gezeigt ist.

Das Getriebe 12 für die Horizontalverstellung weist gleichfalls ein Schneckengetriebe mit Schneckenrad 26 und Schneckenspindel 27 auf. Die Welle 34 der Seilrolle 5 ist über ihr eines Lager hinaus verlängert und mit einer Paßfeder ausgebildet. In die Hohlwellen des Schneckenrades 26 ist wieder eine entsprechend komplementäre Paßfedernut eingearbeitet. Das Getriebe 12 ist auf diesen Wellenstummel kraftschlüssig aufgesteckt und gegen achsiales Verschieben wieder durch eine in die Stirnseite des Wellenstummels eingeschraubte Flügelmutter samt Beilagscheibe gesichert. Dieses Getriebe ist mit justierbaren Drehmomentstützen in Form von Stellschrauben 28, 29 ausgebildet. Diese stützen sich gegen einen Flansch 30 der Seilstütze 1 ab.

Die Schneckenspindel 27 ist wenigstens über ihr eines Ende hinaus verlängert und mit einer Nut 31 ausgebildet. Ein auf diese Spindel aufgesetztes Kettenrad 32 gleitet mit einer Paßfeder in dieser Nut.

Die Kettenräder 17 und 32 bilden zusammen mit der Rollenkette 33 einen Kettentrieb für die Kraftübertragung vom Getriebe 11 auf das Getriebe 12. Dadurch, daß das Kettenrad 32 auf der Schneckenspindel 27 längsverschiebbar ist, ist bei einer Justierung der Drehmomentstützen stets ein Fluchten der Kettenräder 17 und 32 gewährleistet.

Es kann somit auch das Getriebe 12 für die Horizontalverstellung in einfacher Weise an der Seilkrananlage montiert bzw. von dieser demontiert werden und es gehört zusammen mit dem anderen Getriebe 11 und dem Trommelgehäuse samt Seiltrommel 9 zum fahrenden Gut der von Seilkrananlage zu Seilkrananlage transportierten Vorrichtung. Getriebe bzw. Trommelgehäuse und Seiltrommel sind aus Silumin bzw. Stahl gefertigt.

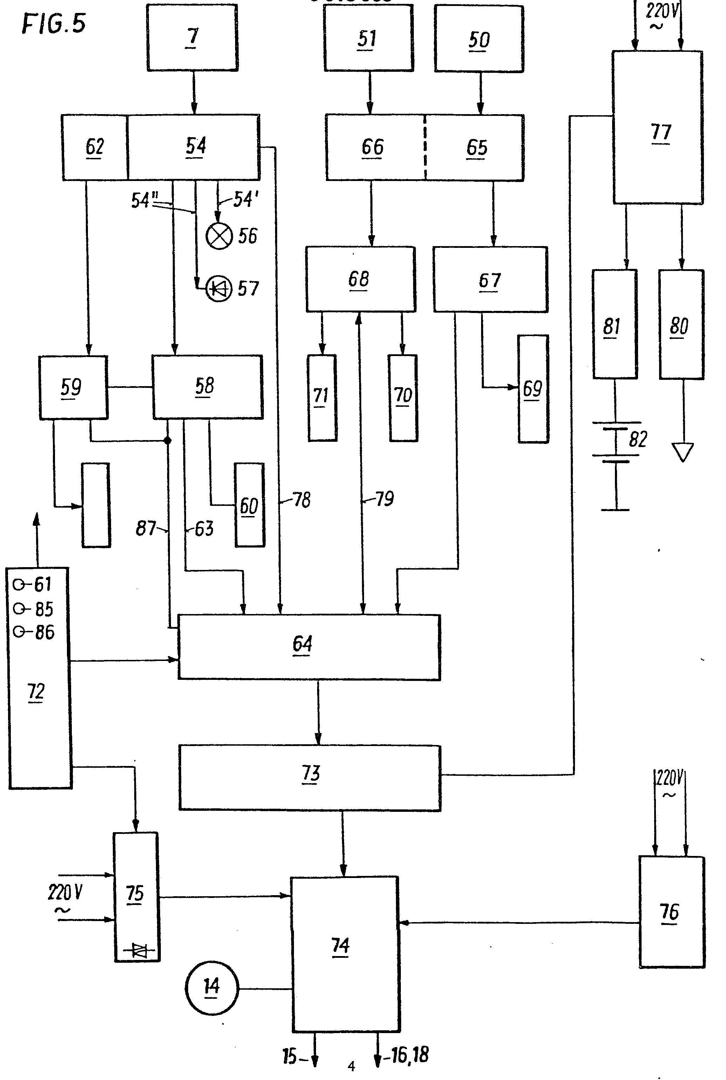

Nachstehend ist die Schaltungsanordnung zur Steuerung bzw. Erfassung der horizontalen und vertikalen Lage der Meßsonde sowie des von der Meßsonde ermittelten Meßwertes anhand der Fig. 5 näher erläutert.

Für die Erfassung des bei der Horizontalverstellung zurückgelegten Weges des Transportseils 4 ist ein Rotationsimpulsgeber 50 (Fig. 1) und für die Erfassung des bei der Vertikalverstellung zurückgelegten Weges des Meßseiles 8 gleichfalls ein Rotationsimpulsgeber 51 vorgesehen. Der Rotationsimpulsgeber (Fig. 2) 50 wirkt direkt mit dem Transportseil 4 zusammen, wohingegen der Rotationsimpulsgeber 51 von einem Keilriemen 52 angetrieben wird, der über eine auf die Seiltrommelwelle aufgekeilte Riemenscheibe 53 läuft.

Die Meßsonde 7 ist als Zwillingssonde ausgebildet und besteht aus dem eigentlichen Meßflügelgeber 54 und einem Endschalter 55. Der Meßflügelgeber 54 rotiert entsprechend der Strömungsgeschwindigkeit und gibt pro Umdrehung, z. B. durch Schließen eines Reedkontaktes, einen Impuls ab. Der Endschalter wird betätigt, wenn nach dem Eintauchen in das Wasser die Meßsonde den Gewässergrund erreicht und schaltet wieder ab, sobald sie von diesem abhebt. Hiedurch kann das Flußprofil eindeutig festgelegt werden.

Jeder Geber 7, 50 bzw. 51 ist an eine Auswerteschaltung 54, 55 bzw. 56 angeschlossen. Die Auswerteschaltung 54 ist im wesentlichen eine Pegelkennschaltung, etwa in der Art eines Schmitt-Triggers ; dem Schließen der Meßsondenleitung durch den Endschalter ist ein erster Spannungspegel und dem Schließen des Reedkontaktes bei der Rotation des Meßflügels ein zweiter Spannungspegel zugeordnet ; liegt der erste Spannungspegel an, so wird der erste Ausgang 54' aktiviert und eine Anzeigelampe 56 leuchtet auf ; liegt der zweite Spannungspegel an, so werden die zweiten Ausgänge 54" aktiviert und es leuchtet eine Kontrollanzeige 57, etwa eine Leuchtdiode, auf und eine Zählschaltung 58 wird mit Zählimpulsen angesteuert. Die Zählschaltung 58 zählt aber nicht fortlaufend, sondern wird durch eine weitere Zählschaltung 59 für eine an 60 voreinstellbare Zeitdauer dann freigegeben, wenn die Starttaste 61 gedrückt ist. 87 ist die der Taste 61 zugeordnete Steuerleitung, 62 der zugehörige Zeit-Taktgenerator. An einen Ausgang der Zählschaltung 58 ist eine Anzeigeschaltung 60 angeschlossen, an der dann die Anzahl der Umdrehungen des Meßflügels pro vorgegebener Zeitdauer abgelesen werden kann, was eindeutig die Fließgeschwindigkeit in diesem Meßpunkt definiert. Ist der Zählvorgang beendet, so gibt die Zählschaltung 58 am Ausgang 63 ein Signal ab, welches durch einen Resettaster 85 abgeschaltet werden kann ; über einen Quittiertaster 86 wird der Motor eingeschaltet und damit das Weiterfahren in die nächste Meßposition in vertikaler Richtung ausgelöst.

Die Rotationsimpulsgeber 50, 51 sind jeweils an den Eingang einer Auswerteschaltung 65 bzw. 66 angeschlossen, von welchem jede mit einer Zählschaltung 67 bzw. 68 verbunden ist.

Bei den Zählschaltungen 67 bzw. 68 handelt es sich um Vorwärts-Rückwärtszähler, wobei der Zähler 68 programmierbar bzw. voreinstellbar ist. Durch die Auswerteschaltung 65 bzw. 66 wird der Vorwärts- oder Rückwärtsbetrieb der Zählschaltungen in Abhängigkeit davon festgelegt, in welcher Richtung die Vertikal- bzw. Horizontalverstellung erfolgt. Jedem der Zähler ist ausgangsseitig eine Anzeigeschaltung 69, 70 zugeordnet. Alle Anzeigeschaltungen arbeiten auf Siebenelementanzeigen.

Die Zählschaltung 68 ist über eine Vorwahlschaltung 71 hinsichtlich des in vertikaler Richtung zurückzulegenden Verstellweges voreinstellbar. Bevor hierauf genauer eingegangen wird, soll der Beginn eines Meßvorganges längs einer Meßlotrechten näher betrachtet werden.

Für den Antriebsmotor 14, die Bremse 15 und den die Kupplung 16 betätigenden Elektromagnet 18 ist eine Steuerschaltung 74 vorgesehen, die über eine Verstärkerschaltung 73 im wesentlichen von der Logik- und Verriegelungsschaltung 64 angesteuert wird. Die Logik- und Verriegelungsschaltung 64 empfängt ihre Schaltbefehle von den Zähl- bzw. Auswerteschaltungen und von einem Bedienpult 72, an welchem beispielsweise die Horizontal- und Vertikalverstellung der Meßsonde in die gewünschte Meßlotrechte bis an die Wasseroberfläche vorgenommen werden kann. Über das Bedienpult 72 ist z. B. auch die kontinuierliche Drehzahlregelung des Antriebsmotors betätigbar bzw. überhaupt der elektrische Antrieb unter Wahrung der durch die Zählschaltung gewährleisteten Anzeige abschaltbar, was bei Verstellung von Hand aus interessant ist.

Die Spannungsversorgung der Kupplung bzw. Bremse erfolgt über eine Trafo- und Gleichrichterschaltung 76, jene der Zählerlogik sowie Verriegelungs- und Verstärkerschaltung über ein Netzgerät 77 mit einer Stabilisierungsschaltung 80. Über das Netzgerät 77 erfolgt auch eine Batterieladung 81. Bei Ausfallen der Netzspannung übernehmen Ni-Cd Batterien 82 die Spannungsversorgung der Zähler-, Verriegelung- und Logikschaltung für etwa zwei Stunden.

Nach Beendigung der Horizontalverschiebung zeigt die Anzeige-Meßschaltung 69 die erreichte und für den anschließenden Meßvorgang gleichbleibende Horizontalentfernung der Meßsonde an. Wenn die Meßsonde mit der Wasseroberfläche gleichgestellt wurde, wird die Zählschaltung 68 auf Null gestellt und anschließend die Sonde bis auf den Grund des Gewässers abgesenkt. Hiebei zählt die Zählschaltung 68 in der durch die Auswerteschaltung 66 festgelegten einen Richtung, bis der Endschalter 55 der Meßsonde den Gewässergrund berührt und längs der Leitung 78 von der Auswerteschaltung 54 ein Stopsignal generiert wird. Dieses Stopsignal liegt an der Logik- und Verriegelungsschaltung 64 an und löst einerseits die Beendigung der Vertikalverstellung durch Stillsetzen des Motors 14 und die Beendigung des Zählvorganges der Zählschaltung 68 aus. Der durch 70 angezeigte Zählerstand entspricht dann der Tiefe des Gewässers in dieser Meßlotrechten. Durch Drücken der Taste 61 kann mit Hilfe von 58 und 59 die Fließgeschwindigkeit in diesem Punkt ermittelt werden, wie dies bereits weiter oben ausführlich dargelegt worden ist. An der Vorwahlschaltung 71 kann nun während dieses Meßvorganges der Abstand zu jenem Meßpunkt in vertikaler Richtung voreingestellt werden, der darauffolgend angefahren werden soll.

Ist nämlich der Meßvorgang nach der an 59 voreingestellten Zeitdauer beendigt, so wird über diem Quittiertaste 86 die Bewegung in Richtung Wasseroberfläche eingeleitet. Gleichzeitig wird aber über 51 der Zähler 68 in Gang gesetzt, der von seinem der Gesamttiefe entsprechenden Zählerstand entsprechend der Voreinstellung an 71 heruntergezählt.

Ist dieser vorbestimmte Zählerstand erreicht, so tritt an 79 ein Stopsignal auf, welches über 64, 73, 74 die Stillsetzung des Motors auslöst. Die Meßsonde hat ihre neue Meßlage erreicht. Nun kann durch Drücken der Taste 61 die Fließgeschwindigkeit ermittelt und an 71 die Position des nächsten Meßpunktes voreingestellt werden. Diese Vorgänge werden sofort wiederholt, bis die Meßlotrechte in der gewünschten Anzahl an Meßpunkten ausgemessen ist. Die Verstellung der Meßsonde in die nächste Meßlotrechte erfolgt dann wieder — wie bereits erläutert — über das Bedienpult.

Erfolgt die Verstellung der Meßsonde beispielsweise wegen einer Störung in der Speisespannungsversorgung von Hand aus durch eine Kurbel, was im Hinblick auf die rauhen Umgebungsbedingungen, in welchen mit diesen Anlagen gearbeitet wird, ein durchaus praktischer Fall ist, so können die Zählschaltungen hinsichtlich ihrer Anzeige weiterverwendet werden, deren Spannungsversorgung erfolgt über die Baterien 82.

Die Verriegelungsschaltung hat den Zweck, um Hand- und Automatikbetrieb zu definieren sowie bei « Handsteuerung » im Fall der Betätigung zwei oder mehrerer Taster die antriebsmäßigen Ausgangsfunktionen zu unterbrechen bzw. den ersten Befehl abzuarbeiten.

### Ansprüche

1. Vorrichtung für die Positionierung einer Meßsonde (7) zur Messung der Wassergeschwindigkeit bzw. Durchflußmenge, insbesondere von Flüssen, mit einer etwa horizontal und quer zur Fließrichtung über ein an Seilstützen (1) abgestütztes Seil (2) verstellbaren Haltekonstruktion (3), welche die in vertikaler Richtung gleichfalls über ein an den Seilstützen (1) abgestütztes Seil (8) verstellbare Meßsonde (7) trägt, wobei für die Verstellung jedes Seils (4, 8) ein von den Seilstützen (1) getragener Seilantrieb (5, 9) vorgesehen ist, dadurch gekennzeichnet, daß der Seilantrieb (9) der Vertikalverstellung über ein Gehäuse (10) an den Seilstützen (1) lösbar (21, 22) angebaut ist, und daß für die Horizontalverstellung der Haltekonstruktion (3) und die Vertikalverstellung der Meßsonde (7) gesonderte Getriebe (11, 12) vorgesehen sind, die auf den Wellen (23, 24) der Seilantriebe (9, 5) für die Vertikal- bzw. Horizontalverstellung jeweils so angeordnet sind, daß sie nach Lösen einer Arretierung von diesen Wellen (23, 24) abnehmbar sind, und daß an eines dieser Getriebe (11) ein das Maß der Positionierung bestimmendes Antriebsaggregat (14) angekuppelt ist und daß die Getriebe (11, 12) antriebsmäßig miteinander kuppelbar (33) sind.

2. Vorrichtung nach Anspruch 1, dadurch gekennzeichnet, daß jedes Getriebe (11, 12) als Schneckengetriebe (11, 13 ; 26, 27) ausgebildet und für die antriebsmäßige Kupplung der Schneckenspindeln der beiden Getriebe eine Rollenkette (33) vorgesehen ist, wobei das eine Kettenrad (17) der Rollenkette (33) an die eine Schneckenspindel (13) durch eine Kupplung (16), zweckmäßig eine Scheibenkupplung, ankuppelbar ist.

3. Vorrichtung nach Anspruch 2, dadurch gekennzeichnet, daß Drehmomentstützen (28, 29) eines Getriebes (12) justierbar ausgebildet sind, und das Kettenrad (32) dieses Getriebes (12) auf der Schneckenspindel (27) aufgekeilt, jedoch längs derselben verschiebbar, angeordnet ist, um ein Fluchten der beiden Kettenräder (17, 32) zu gewährleisten.

4. Vorrichtung nach Anspruch 1, 2 oder 3, dadurch gekennzeichnet, daß die Kupplung (16) dem Getriebe (11) für die Vertikalverstellung zugeordnet ist, dieses Getriebe (11) ferner das Antriebsaggregat (14) und zweckmäßig eine Bremse (15) aufweist, welche eine sofortige Beendigung der Bewegungen gewährleistet.

5. Vorrichtung nach einem der Ansprüche 1 bis 4, dadurch gekennzeichnet, daß das Antriebsaggregat (14) ein stufenlos regelbarer Elektromotor ist.

6. Schaltungsanordnung zur Steuerung bzw. Erfassung der horizontalen und vertikalen Lage der Meßsonde sowie des von der Meßsonde ermittelten Meßwertes für eine Vorrichtung nach einem der Ansprüche 1 bis 5, dadurch gekennzeichnet, daß der Halterkonstruktion und der Meßsonde Lagesensoren (50, 51), insbesondere Rotationsimpulsgeber, zugeordnet sind, die Meßsonde (7) als Zwillingssonde in Form eines Meßflügelgebers (54), welcher ein der Umdrehungsgeschwindigkeit des Meßflügels proportionales digitales Signal abgibt, und eines Endschalters (55) ausgebildet ist, die Geber (7, 50, 51) jeweils mit dem Eingang einer Zählschaltung (58, 67, 68) verbunden sind, welche Anzeige- und Steuerausgänge aufweist und diese Steuerausgänge unter Zwischenschaltung einer Verriegelungs- (64) und Verstärkerschaltun (73) an eine Steuerschaltung (74) für einen insbesondere stufenlos regelbaren Antriebsmotor (14), Bremse (15) und/ oder Kupplung (16, 18) geführt sind.

7. Schaltungsanordnung nach Anspruch 6, dadurch gekennzeichnet, daß wenigstens die Zählschaltungen (67, 68) für die Lagesensoren (50, 51) als programmierbare Vor-Rückwärtszähler ausgebildet sind.

8. Schaltungsanordnung nach Anspruch 6 oder 7, dadurch gekennzeichnet, daß die Meßsonde (7) unter Zwischenschaltung einer von dem Endschalter steuerbaren Auswerteschaltung (54) van die Zählerschaltung geführt ist, welche den eigentlichen Zähler (58) mit dem Anzeige- (60) und Steuerausgang (63) sowie ein Zeitsteuerglied (59, 62) umfaßt, durch welches der Zähler (58) für eine voreinstellbare Zeitdauer hinsichtlich seiner Zählfunktion aktivierbar ist.

9. Schaltungsanordnung nach einem der Ansprüche 5 bis 7, dadurch gekennzeichnet, daß die Verriegelungsschaltung (64) als Trennschaltung ausgebildet ist, welche die Steuerausgänge (63, 78) der Zählschaltung unterbricht.

## Claims

1. Device for the positioning of a measuring probe (7) for measuring the water velocity or throughflow quantity, particularly of rivers, having a supporting structure which is adjustable substantially horizontally and transversely of the direction of flow via a cable (2) supported on cable supports (1), said supporting structure (3) carrying a measuring probe (7) adjustable in a vertical direction likewise via a cable (8) supported on cable supports (1), adjustment of each cable (4, 8) being provided by a cable drive (5, 9) carried by the cable supports (1), characterised in that the cable drive (9) of the vertical adjustment means is separably (21, 22) mounted via a housing (10) on the cable supports (1) and in that for horizontal adjustment of the supporting structure (3) and vertical adjustment of the measuring probe (7) separate gears (11, 12) are provided which are in each case so disposed on the shafts (23, 24) of the cable drives (9, 10) for vertical and respectively horizontal adjustment that after a locking means has been released, they can be removed from these shafts (23, 24) and in that coupled to one of these gears (11) there is a drive assembly (14) for determining the degree of positioning and in that the gears (11, 12) can be coupled (33) to each other in a driving fashion.

2. Device according to Claim 1, characterised in that each gear (11, 12) is constructed as a worm gear (12, 13 ; 26, 27) and in that for driving coupling of the worm spindles of the two gears, a roller chain (33) is provided, one chain wheel (17) of the roller chain (33) being adapted to be coupled to one worm spindle (13) through a coupling (16), ideally a plate coupling.

3. Device according to Claim 2, characterised in that the torque support (28, 29) of a gear (12) is constructed so as to be adjustable, and in that the chain wheel (32) of this gear (12) is keyed onto the worm spindle (27) but is displaceable along the said spindle in order to guarantee alignment of the two chain wheels (17, 32).

4. Device according to Claims 1, 2 or 3, characterised in that the coupling (16) is associated with the gear (11) for vertical adjustment, this gear (11) furthermore having the drive assembly (14) and expediently a brake (15) to guarantee immediate termination of movements.

5. Device according to one of Claims 1 to 4, characterised in that the drive assembly (14) is an infinitely adjustable electric motor.

6. Circuit arrangement for controlling and/or determining the horizontal and vertical location of the measuring probe and the measured value ascertained by the measuring probe, for a device according to one of Claims 1 to 5, characterised in that the supporting structure and the measuring probe have associated with them positional sensors (50, 51), particularly rotary pulse transmitters, and in that the measuring probe (7) is constructed as a twin probe in the form of a measuring vane transmitter (54) which emits a digital signal proportional to the speed of rotation of the measuring vane, and in the form of a limit switch (55), the transmitters (7, 50, 51) being in each case connected to the input of a counting circuit (58, 67, 68) having indicating and control outputs, these control outputs being carried via interposed interlocking (64) and amplifier (73) circuits to a control circuit (74) for a particularly infinitely regulable drive motor (14), brake (15) and/or coupling (16, 18).

7. Circuit arrangement according to Claim 6, characterised in that at least the counting circuits (67, 68) for the positional sensors (50, 51) are constructed as programmable forwards-reverse counters.

8. Circuit arrangement according to Claim 6 or 7, characterised in that the measuring probe (7) is led through an interposed evaluating circuit (54) controllable by the limit switch, to the counter circuit which comprises the actual counter (58) with the indicating (60) and control (63) outputs and a time control member (59, 62) by which the counter (58) can be activated for a pre-settable period of time in respect of its counting function.

9. Circuit arrangement according to one of Claims 5 to 7, characterised in that the interlocking circuit (64) is constructed as an isolating circuit which interrupts the control outputs (63, 78) of the counting circuit.

## Revendications

1. Dispositif pour le positionnement d'une sonde de mesure (7) pour la mesure de la vitesse de l'eau et/ou du débit, en particulier dans des cours d'eau, comprenant un organe porteur (3) déplaçable à peu près horizontalement et perpendiculairement au sens d'écoulement par l'intermédiaire d'un câble (2) reposant sur des pylônes (1), cet organe porteur portant la sonde (7) de manière déplaçable verticalement aussi par l'intermédiaire d'un câble (8) soutenu par les pylônes, des moyens d'entraînement (5, 9) des câbles portés par les pylônes (1) étant prévus pour le déplacement de chaque câble (4, 8), caractérisé en ce que le moyen d'entraînement de câble (9) pour le déplacement vertical est monté amovible (21, 22) par l'intermédiaire d'un bâti (10) sur les pylônes (1) et que, pour le déplacement horizontal de l'organe porteur (3) et le déplacement vertical de la sonde (7), il est prévu des trains d'engrenages distincts (11, 12) qui sont montés sur les arbres (23, 24) des moyens d'entraînement de câbles (9, 5) pour les déplacements verticaux et horizontaux, de sorte qu'après desserrage d'un moyen de blocage, ils peuvent être retirés de ces arbres (23, 24) et que, à l'un de ces trains d'engrenages (11) est accouplé un groupe d'entraînement (14) déterminant la cote de positionnement cependant que les trains d'engrenages (11, 12) peuvent être accouplés (33) entre eux pour réaliser l'entraînement.

2. Dispositif selon la revendication 1 caractérisé en ce que chaque train d'engrenages (11, 12) est un couple roue dentée-vis sans fin (12, 13 ; 26, 27) et que, pour l'accouplement d'entraînement des vis sans fin des deux trains, il est prévu une chaîne à rouleaux (33), un pignon (17) associé à cette chaîne (33) pouvant être accouplé à l'une des vis sans fin (13) par un accouplement (16) qui est de préférence du type à plateaux.

3. Dispositif selon la revendication 2 caractérisé en ce que des butées d'arrêt (28, 29) anticouple d'un train d'engrenages (12) sont ajustables et que le pignon de chaîne (32) de ce train (12) est calé en rotation avec la vis sans fin (27), tout en étant déplaçable en sens longitudinal par rapport à cette dernière pour permettre l'alignement des deux pignons de chaîne (17, 32).

4. Dispositif selon l'une quelconque des revendications 1, 2 et 3 caractérisé en ce que l'accouplement (16) est associé au train d'engrenages (11) pour le déplacement vertical et ce train (11) comprend en plus le groupe d'entraînement (14) et, avantageusement, un frein (15) qui assure un arrêt immédiat des mouvements.

5. Dispositif selon l'une quelconque des revendications 1 à 4 caractérisé en ce que le groupe d'entraînement (14) est un moteur électrique à variation continue.

6. Circuit de commutation pour la commande et/ou la saisie des positions horizontales et verticales de la sonde ainsi que de la valeur mesurée par la sonde, pour un dispositif selon l'une quelconque des revendications 1 à 5, caractérisé en ce que des détecteurs de position (50, 51) et en particulier des émetteurs rotatifs d'impulsion sont associés à l'organe porteur et à la sonde, la sonde (7) est une sonde double comprenant un émetteur à moulinet hydrométrique (54), qui délivre un signal numérique proportionnel à la vitesse de rotation du moulinet hydrométrique, ainsi qu'un interrupteur de fin de course (55), les émetteurs (7, 50, 51) sont reliés chacun à l'entrée d'un circuit de comptage (58, 67, 68) ayant des sorties de visualisation et de commande et ces sorties de commande sont reliées par l'intermédiaire d'un circuit de verrouillage (64) et d'amplification (73), à un circuit de commande (74) d'un moteur d'entraînement (14) avantageusement à variation continue, un frein (15) et/ou un accouplement (16, 18).

7. Circuit de commutation selon la revendication 6 caractérisé en ce qu'au moins les circuits de comptage (67, 68) des détecteurs de positions (50, 51) sont des compteurs-décompteurs programmables.

8. Circuit de commutation selon l'une quelconque des revendications 6 et 7 caractérisé en ce que la sonde (7) est reliée, par l'intermédiaire d'un circuit d'analyse (54) pouvant être commandé par le commutateur de fin de course, au circuit de comptage qui comprend le compteur (58) proprement dit, avec les sorties de visualisation (60) et de commande (63) ainsi qu'une horloge (59, 62) qui permet d'activer le compteur (58) pour une durée pré-réglable de sa fonction de comptage.

9. Circuit de commutation selon l'une quelconque des revendications 5 à 7 caractérisé en ce que le circuit de verrouillage (64) est conçu comme un circuit de coupure, qui interrompt les sorties de commande (63, 78) du circuit de comptage.

FIG.1

0 018 963

0 018 963

FIG.2

# FIG. 3

# FIG. 4

11

18

23

15

17

16

13

19

14

18

15

13

11

19

0 018 963

FIG.5

0 018 963